# EUROPEAN PATENT APPLICATION

(11) **EP 2 426 590 A1**
(43) Date of publication of application: **07.03.2012**
(21) Application number: 11179764.3
(22) Date of filing: 01.09.2011
(51) Int. Cl.: G06F 3/048

(54) **Mobile terminal having a touch screen and method for displaying contents therein**

(30) Priority: 02.09.2010 KR 20100085920
(71) Applicant: SAMSUNG ELECTRONICS CO., LTD., Suwon-si, Gyeonggi-do (KR)
(72) Inventor: Jang, Kyoung Don, Gyeonggi-do (KR)
(74) Representative: Jenkins, Richard Gavin

(57) **Abstract**

A mobile terminal having a touch screen and a method for displaying contents therein are provided. The method for displaying contents in a mobile terminal having a touch screen includes determining whether a touch action moves when the touch action is sensed on displayed contents, calculating a physical display change amount for changing and displaying the contents according to the touch action when the touch moves, and continuously changing and displaying the contents according to the physical calculated display change amount when the touch action stops.

## Description

### TECHNICAL FIELD OF THE INVENTION

The present invention relates to mobile terminals, and more particularly, to a mobile terminal having a touch screen and method for displaying contents therein.

### BACKGROUND OF THE INVENTION

Mobile terminals may perform various types of functions. Due to the relatively small sizes of most conventional mobile terminals, however, the size of these mobile terminals may be restricted. Conventional mobile terminals often have a drawback in that their associated display units and input units may be configured to display a relatively large amount of information. To remedy this drawback, recent mobile terminals tend to include a touch screen composed of a display unit and an input unit implemented as a single unit.

Touch screens typically includes input units configured to sense a touch action from a user and a display unit configured to display functions and contents executed by the mobile terminal. Thus, mobile terminals having touch screens such as these may have an advantage of providing an intuitive user interface for a user.

As functions executable on mobile terminals may vary, an amount of displayable contents may become relatively large. Thus, when contents selected by the user are displayed on the mobile terminal, all contents may be difficult to display on the screen at one time. Accordingly, the mobile terminal may display a scroll mechanism or other similar device on the screen that allows the user to view other non-displayed contents.

To view contents from mobile terminals having touch screens, the user often drags a scroll mechanism that is displayed on the screen. However, when an amount of the contents is large, and when the desired contents are located at a lower end of the displayable contents,, the user often continuously drags the scroll mechanism until the desired contents are displayed.

### SUMMARY OF THE INVENTION

To address the above-discussed deficiencies of the prior art, it is a primary object to provide a mobile terminal and a method for displaying contents according to a sensed touch action through a touch screen of the mobile terminal.

In accordance with an aspect of the present invention, a method for displaying contents in a mobile terminal having a touch screen includes determining whether a touch action moves when the touch action is sensed on displayed contents, calculating a physical display change amount for changing and displaying the contents according to the movement of the touch action when the touch action moves, and continuously changing and displaying the contents according to the physical calculated display change amount when the touch action stops. The method further includes calculating a physical display change amount that includes changing and displaying the contents according to the physical calculated display change amount.

In accordance with another aspect of the present invention, a method for displaying contents in a mobile terminal having a touch screen further includes maintaining the contents that is changed at a release time of a touch action when the touch action is released. The method further includes continuously changing and displaying the contents in a manner that includes continuously changing a location of the contents, and continuously changing a size of the contents. The physical display change amount includes at least one of a speed and a distance of a movement of the touch action.

In accordance with another aspect of the present invention, a mobile terminal for displaying contents includes a touch screen including a display unit configured to display contents and a touch sensor sensing a touch action on the contents. The mobile terminal also includes a controller configured to calculate a physical display change amount for changing and displaying the contents according to movement of a touch action when the movement is sensed through the touch sensor, and control the display unit to continuously change and display the displayed contents according to the physical calculated display change amount when the touch action stops. The controller is further configured to control the display unit to change and display the contents according to the physical calculated display change amount while calculating the physical display change amount, and control the display unit to maintain the contents that is changed at a release time of the touch action when the touch action is released. The controller is further configured to control the display unit to continuously change a location of the contents and to display the contents, control the display unit to continuously change a size of the contents on the touch screen. The physical display change amount comprises at least one of a speed and a distance of the movement of the touch action.

In the present invention, although there may be a relatively large amount of contents displayed on a mobile terminal having a touch screen, a user may select desired contents by a simple operation.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates an example mobile terminal according to one embodiment of the present invention;

FIGURE 2 illustrates an example screen on which a location of contents may be changed according to one embodiment of the present invention;

FIGURE 3 illustrates an example screen on which the size of contents may be changed according to one embodiment of the present invention; and

FIGURE 4 illustrates an example method for displaying contents in a mobile terminal according to one embodiment of the present invention.

### DETAILED DESCRIPTION OF THE INVENTION

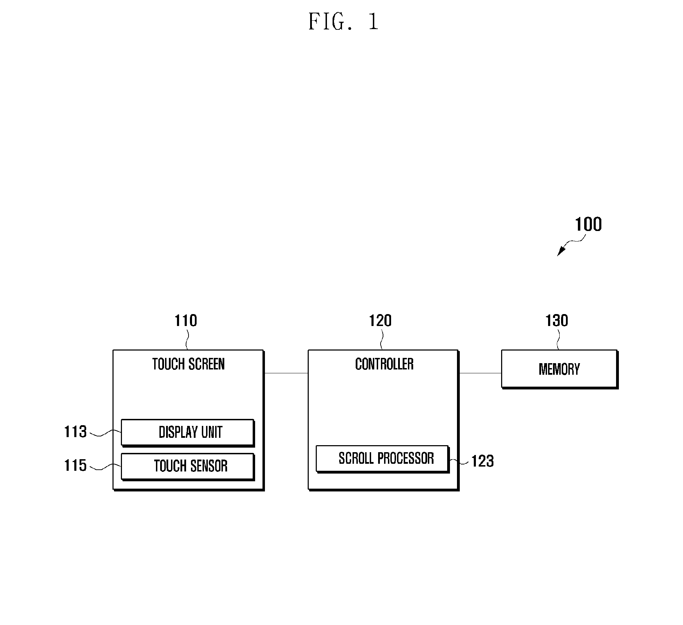

FIGURES 1 through 4, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged mobile terminal having a display screen. Detailed descriptions of well-known functions and structures incorporated herein may be omitted to avoid obscuring the subject matter of the present invention.

As used herein, the term "contents" refers to various data that may be displayed on a mobile terminal. For example, the contents may include various data displayable on the mobile terminal such as menu icons displayed in a menu selection mode of a mobile terminal, messages displayed in a message display mode, and images such as photographs displayed in an image display mode.

As used herein, the term "touch action" refers to a state in which a user make contact with a surface of a touch screen.

FIGURE 1 illustrates a mobile terminal according to one embodiment of the present invention. The mobile terminal 100 includes a touch screen 110, a controller 120, and a memory 130.

The touch screen 110 includes a display unit 113 and a touch sensor 115. Here, the display unit 113 may display various types of contents associated with states and operations of the mobile terminal 100. In particular, the display unit 113 may change a location or the size of contents according to an input event sensed through the touch sensor 115, and display the contents.

The touch sensor 115 is integral with the display unit 113, and senses an input event occurring due to contact and release of a finger of a user defining a touch action. If the input event is sensed, the touch sensor 115 transfers a coordinate corresponding to a sensed region of the input event to the controller 120. The input event may include a touch action, a movement of the touch action, a stop of the touch action, and release of the touch action.

The touch sensor 115 transfers coordinates of a region on the display unit 113 on which the touch is sensed to the controller 120. If a movement is sensed, the touch sensor 115 continuously recognizes and transfers coordinates that are changed according to the movement to the controller 120.

The controller 120 controls operation of various elements and states of the mobile terminal 100. Here, the controller 120 may change a state of contents displayed on the display unit 113 according to an input event sensed through the touch sensor 115, and display certain contents. In more detail, the controller 120 may display contents on the display unit 113 according to selection provided by a user. Further, the controller 120 may change a location or a size of the contents displayed on the display unit 113 according to an input event sensed through the touch sensor 115, and display the contents associated with the changed location and/or size of the contents. To do this, the controller 120 may include a scroll processor 123.

The scroll processor 123 may determ ine that an input event is sensed through the touch sensor 115, and control the display unit 113 to change a location of the contents according to the determined input event and to display the contents. Further, the scroll processor 123 may determ ine that an input event is sensed through the touch sensor 115, and control the display unit 113 to change the size of the contents according to the determined input event and to display the contents associated with the changed size of the contents. The input event may include contains a touch action, a movement of the touch action, a stop of the touch action, and a release of the touch action. If coordinates from the touch sensor 115 are initially transferred to the scroll processor 123, it senses the coordinates as a touch action. If coordinates transferred through the touch sensor 115 are continuously changed, the scroll processor 123 senses it as a movement of the touch action. If the same coordinates are transferred to the scroll processor 123 through the touch sensor 115 for a specified time, the scroll processor 123 determine the touch action to comprise a stop of the touch action. If no coordinates are transferred to the scroll processor 123 through the touch sensor 115, the scroll processor 123 the touch action to include a release of the touch action.

The scroll processor 123 calculates a physical display change amount using sensed coordinates according to a touch action or a movement of the touch action through the touch sensor 115. Further, the scroll processor 123 may change a location or a size of the contents according to the physical calculated display change amount, and display the contents associated with the changed location or size. If a stop of the touch action is sensed through the touch screen 110, the scroll processor 123 may control the display unit 113 to continuously change a location and a size of the contents the physical calculated display change amount and display the contents associated with the calculated display change amount. The scroll processor 123 may determine whether a release of the touch action is sensed, and control the display unit 113 to maintain display of the contents that were changed at a sensed point in time the release. The physical display change amount may be at least one of a speed or a distance of the movement. At this time, the distance of the touch movement may be calculated using coordinates of initially and released sensed touches. Further, the speed of the movement of the touch action may be calculated using a distance of the movement, and a difference between the initially sensed point in time and the released point in time of the touch action.

For example, it is assumed that at least one portion of the contents is displayed on the display unit 113. If a touch action is sensed, the touch sensor 115 transfers coordinates of a sensed region of the touch to the scroll processor 123. Accordingly, the scroll processor 123 determines the location and size of the portion of the contents which will be changed according to an input event determined through coordinates received from the touch sensor 115.

Subsequently, the touch sensor 115 transfers coordinates that are changed according to a movement of the touch action to the scroll processor 123. The scroll processor 123 calculates a physical display change amount based on previous coordinates and changed coordinates. While the physical display change amount is calculated according to the movement, the scroll processor 123 increases or reduces the size of the contents, or changes a location of the contents determined according to the physical calculated display change amount, and displays the contents associated with the calculated movement of the touch action.

When the touch action moves by a certain distance and then stops, the touch sensor 115 senses and transfers determined distance to the scroll processor 123. Since the coordinates transferred through the touch sensor 115 are the same when the movement stops, the scroll processor 123 determines that the touch action has stopped without movement. Accordingly, the scroll processor 123 may continuously increase or reduce the size of the contents, or change a location of the contents displayed on the display unit 113 according to a physical display change amount calculated directly before a stop of the touch action. If a release of the touch action is sensed through the touch sensor 115, the scroll processor 123 may control the display unit 113 to maintain the size or the location of the contents changed at the time in which the touch action is released.

The memory 130 stores instructions that may include various functions to be executed by the mobile terminal 100. The memory 130 also stores contents that may be displayed during execution of the functions.

The mobile terminal 100 having a construction mentioned above may change a location or the size of the contents displayed on the display unit 113 according to an input event sensed through the touch sensor 115, and display the contents associated with the changed location or size. That is, if a touch action is sensed through the touch screen 110, the mobile terminal 100 may display the contents associated with the sensed region of the touch action. Furthermore, if movement of the touch action is sensed, the mobile terminal 100 may determine a physical display change amount according to the movement. If the contents are changed and displayed according to the physical display change amount and the movement stops, the mobile terminal 100 may continuously change the contents according to the physical calculated display change amount until touch release is sensed, and display the contents associated with the movement.

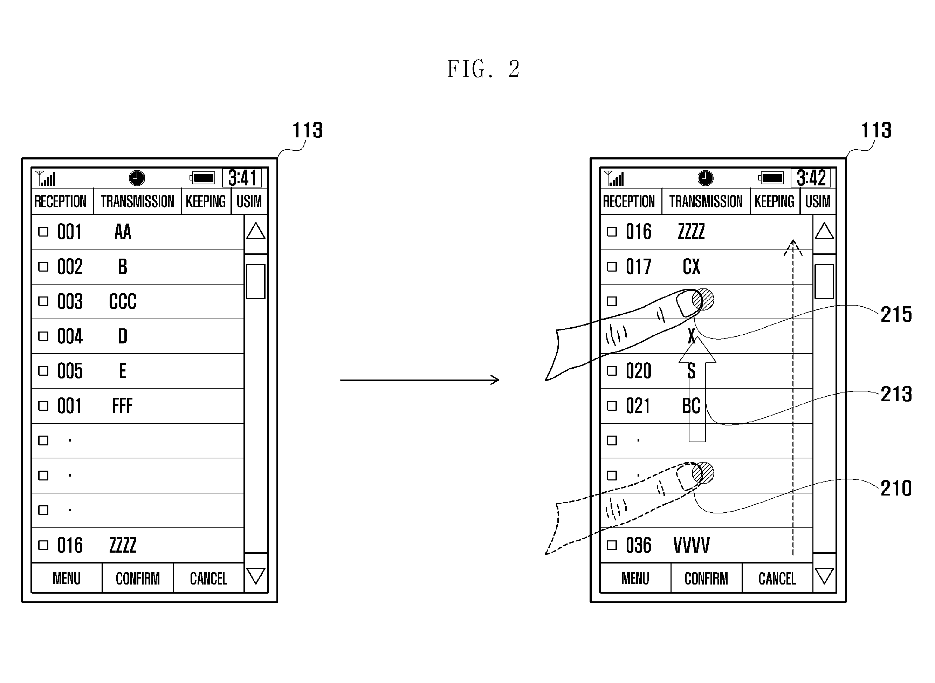

FIGURE 2 illustrates an example screen on which a location of contents changes according to one embodiment of the present invention. If a user selects a message display mode, the mobile terminal 100 may display stored messages as a list as shown. Next, if a touch action 210 is sensed through the touch screen 110, the mobile terminal 100 determines the contents associated with a sensed region of the touch action. If movement 213 of the touch action is sensed through the touch screen 110, the mobile terminal 100 determines a physical display change amount according to the movement of the touch action. At this time, a location of the contents may be changed according to the determined physical display change amount, and display the contents associated with the movement on the display.

If a stop 215 of the touch action is sensed through the touch screen 110, the mobile terminal 100 determines whether a release is sensed. At this time, the mobile terminal 100 continuously changes the location of the contents according to the physical display change amount until the release is sensed. For example, as shown in FIGURE 2, a user performs a touch action to check messages and moves from a lower direction of a screen to an upper direction of the screen. Accordingly, the mobile terminal 100 determines messages displayed on a sensed region of the touch action and a physical display change amount according to the movement.

The mobile terminal 100 changes a location of messages checked according to the checked physical display change amount. At this time, the mobile terminal 100 may display messages checked until a release is sensed while moving the checked messages to an upper direction of a screen by a physical display change amount. Although the foregoing example illustrates that a direction of the movement is oriented toward an upper direction of a screen, the present invention is not limited to such actions. That is, the direction of the movement may be a horizontal direction or a diagonal direction of the screen. Further, a location of contents may be changed corresponding to a direction of each touch movement.

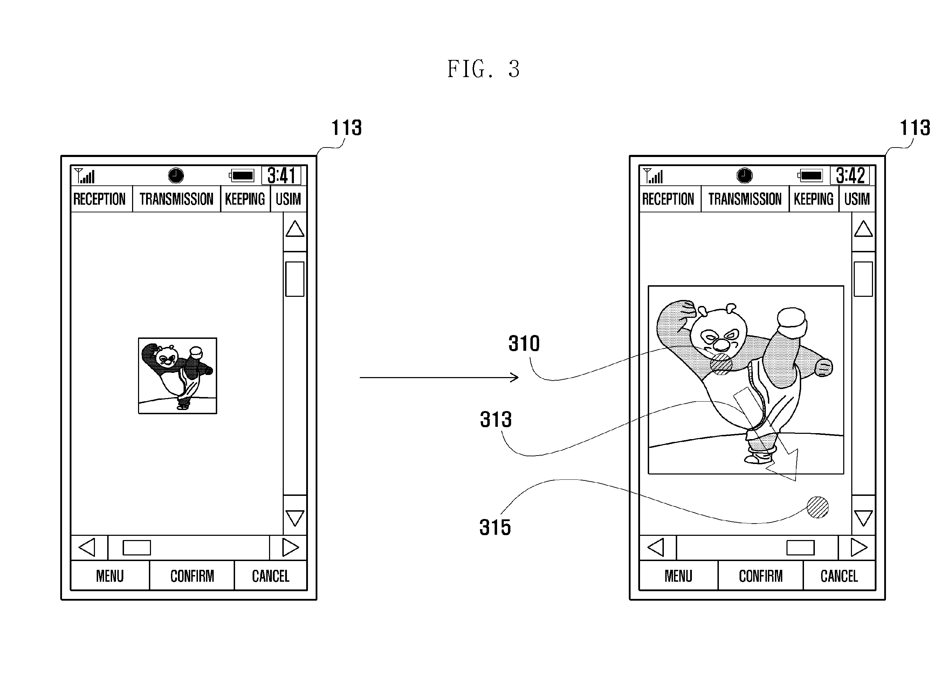

FIGURE 3 illustrates an example screen on which the size of contents changes according to one embodiment of the present invention. If a user selects an image display mode, a mobile terminal 100 displays certain contents that may include images selected by the user on the display unit 113.

If a touch action 310 is sensed through a touch screen 110, the mobile terminal 100 determines the contents to be displayed according to a sensed region of the touch 310. If movement 313 of the touch action is sensed through the touch screen 110, the mobile terminal 100 determines a physical display change amount according to the determined movement. At this time, the size of the contents may be changed according to the determined physical display change amount, and display the contents according to the determined physical display change amount.

If a stop 315 of the touch action is sensed through the touch screen 110, the mobile terminal 100 determines whether a release of the touch action is sensed. At this time, the mobile terminal 100 may continuously change a size of the contents according to a physical display change amount until the release is sensed, and display the contents associated with the changed size. For example, as shown in FIGURE 3, a user may perform a touch action and move the touch action from an upper direction of a screen to a lower direction of the screen to enlarge an image. Accordingly, the mobile terminal 100 determines an image displayed on a sensed region of the touch action through the touch screen and a physical display change amount according to a movement of the touch action. Further, if the touch action stops, the mobile terminal 100 may increase the size of an image determined according to the checked physical display change amount. At this time, the mobile terminal 100 may continuously increase or reduce the size of an image until the touch release is sensed by a physical display change amount and display the contents associated with the increased or reduced size.

Although the foregoing embodiment has illustrated that a direction of the touch action is oriented from an upper direction of a screen toward a lower direction of the screen, the present invention is not limited to such actions. That is, a direction of touch action may include a horizontal direction or a diagonal direction of a screen. The size of the contents may also be increased or reduced corresponding to a direction of each touch action.

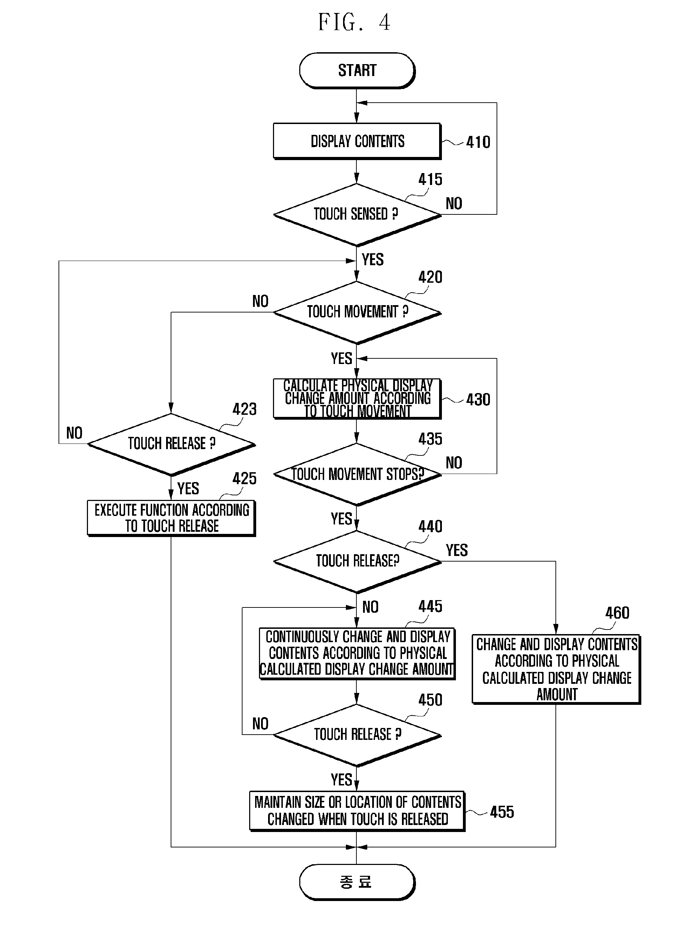

FIGURE 4 illustrates a method for displaying contents in a mobile terminal according to one embodiment of the present invention. A controller 120 displays contents on a display unit 113 according to a selection provided by a user in step 410. The displayed contents generally refer to various forms and types of data displayed on the mobile terminal 100. For example, the contents may include menus displayed in a menu display mode, images displayed in an image display mode, messages displayed in a message display mode, and one or more documents displayed in a document view mode.

Next, the controller 120 determines whether a touch action is sensed through a touch screen 110 at step 415. If the touch action is sensed, the controller 120 determines whether a movement of the touch action is sensed through the touch screen 110 at step 420. If a touch action is sensed through the touch screen 110, the controller 120 determines which contents are displayed on a sensed region of the touch action.

If a movement of the touch action is not sensed, the controller 120 determines whether the touch action is released through the touch screen 110 at step 423. If the touch action is released, the controller 120 executes a function according to a release using the determined contents at step 425. If the contents include menus, an executable function may display lower items of the menus. If the determined contents include messages, the executable function may display corresponding messages.

If the process returns to step 410 and a movement is sensed, the controller 120 calculates a physical display change amount according to the touch movement at step 430. Although not shown, while the physical display change amount is calculated according to the movement, the controller 120 changes a location or the size of the contents that are displayed according to the calculated display change amount, and displays the contents associated with the movement. The physical display change amount may be displayed by changing a location or the size of the contents displayed on the display unit 113, and may include a speed and distance of the movement.

Subsequently, the controller 120 determines whether the touch action stops through the touch screen 110 at step 435. If the touch action stops, the controller 120 determines whether a release of the touch action is sensed through the touch screen 110 at step 440. If the release is not sensed, the controller 120 continuously changes and displays the contents according to a physical display change amount calculated directly before the touch action stops at step 445. Through the foregoing procedure, the controller 120 may continuously change a location of the contents according to the physical calculated display change amount and display the contents associated with the touch action. Additionally, the controller 120 may continuously increase or reduce the size of the contents according to the physical calculated display change amount and display the contents associated with the increased or reduced size.

Next, the controller 120 determines whether the touch action is released through the touch screen 110 at step 450. If the touch release is not sensed through the touch screen 110, the controller 120 again performs step 445. Conversely, if a release of the touch action is sensed through the touch screen 110, the controller 120 maintains the size or a location of contents changed when the touch action is released, and displays them on the display unit 113 at step 455.

If the process returns to step 440 and a release is sensed, the controller 120 changes a location and the size of the contents according to the physical calculated display change amount and displays the contents at step 460.

Through the foregoing procedures, the mobile terminal 100 may change a location and the size of the contents according to sensed touch action, a movement of the touch action, a stop of the touch action, and display the resulting contents. Therefore, even if a user does not continue to perform touch movement to check contents not displayed on a display unit 113, the user may check desired contents.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for displaying contents in a mobile terminal having a touch screen, the method comprising:
determining whether a touch action moves when the touch action is sensed on displayed contents of the touch screen;
calculating a physical display change amount for changing and displaying the contents according to the movement of the touch action when the touch action moves; and
continuously changing and displaying the contents according to the physical calculated display change amount when the movement of the touch action stops.

2. The method of claim 1, wherein calculating the physical display change amount comprises changing and displaying the contents according to the physical calculated display change amount while calculating the physical display change amount.

3. The method of claim 1, further comprising maintaining the contents which is changed at a release time of the touch action when the touch action is released.

4. The method of claim 1, wherein continuously changing and displaying the contents comprises continuously changing a location of the contents and displaying the contents.

5. The method of claim 1, wherein continuously changing and displaying the contents comprises continuously changing a size of the contents and displaying the contents.

6. The method of claim 1, wherein the physical display change amount comprises at least one of a speed and a distance of the movement of the touch action.

7. A mobile terminal for displaying contents, the mobile terminal comprising:
a touch screen including a display unit configured to display the contents and a touch sensor configured to sense a touch action on the contents that is displayed on the display unit; and
a controller configured to:
calculate a physical display change amount for changing and displaying the contents according to a movement of the touch action when the movement is sensed through the touch sensor; and
control the display unit to continuously change and display the displayed contents according to the physical calculated display change amount when the movement of the touch action stops.

8. The mobile terminal of claim 7, wherein the controller is configured to control the display unit to change and display the contents according to the physical calculated display change amount while calculating the physical display change amount.

9. The mobile terminal of claim 7, wherein the controller is configured to control the display unit to maintain contents which is changed at a release time of the touch action when the touch action is released.

10. The mobile terminal of claim 7, wherein the controller is configured to control the display unit to continuously change a location of the contents and to display the contents.

11. The mobile terminal of claim 7, wherein the controller is configured to control the display unit to continuously change a size of the contents and to display the contents.

12. The mobile terminal of claim 7, wherein the physical display change amount comprises at least one of a speed and a distance of the movement of the touch action.
